# EUROPEAN PATENT SPECIFICATION

(11) **EP 4 189 610 B1**
(45) Date of publication and mention of the grant of the patent: **18.11.2026**
(21) Application number: 21790652.8
(22) Date of filing: 01.09.2021
(51) Int. Cl.: G06N 10/60

(54) **VERIFIED QUANTUM PHASE ESTIMATION**
VERIFIZIERTE QUANTENPHASENSCHÄTZUNG
ESTIMATION DE PHASE QUANTIQUE VÉRIFIÉE

(30) Priority: 01.09.2020 US 202063073134 P
(43) Date of publication of application: 07.06.2023
(60) Divisional application: 26210501.8
(73) Proprietor: Google LLC, Mountain View, CA 94043 (US)
(72) Inventor: O'BRIEN, Thomas Eugene, 80636 Munich (DE); BABBUSH, Ryan, Mountain View, California 94043 (US); RUBIN, Nicholas Charles, Mountain View, California 94043 (US); MCCLEAN, Jarrod Ryan, Mountain View, California 94043 (US)
(74) Representative: Varley, James Richard
(86) International application number: PCT/US2021/048710
(87) International publication number: WO 2022/051395

(56) References cited:
- O'BRIEN THOMAS E ET AL: "Quantum phase estimation of multiple eigenvalues for small-scale (noisy) experiments", NEW JOURNAL OF PHYSICS, vol. 21, no. 2, 28 February 2019 (2019-02-28), pages 023022, XP055878252, Retrieved from the Internet <URL:http://iopscience.iop.org/article/10.1088/1367-2630/aafb8e> DOI: 10.1088/1367-2630/aafb8e

## Description

### BACKGROUND

This specification relates to quantum computing.

Quantum phase estimation is a protocol for learning the eigenphases *e^{iϕj}* of an unitary operator *U* or, equivalently, for learning the eigenvalues *Eⱼ* of a Hermitian operator H since such operators generate respective unitary operators via exponentiation *U = e^{iHt}.*

"Quantum phase estimation of multiple eigenvalues for small scale (noisy) experiments" (TE O'Brien et al., 2019 New J. Phys. 21 023022) discloses a new post-processing technique to extract eigenvalues from phase estimation data based on a classical time-series (or frequency) analysis and contrasts this to an analysis via Bayesian methods.

### SUMMARY

This specification describes technologies for mitigating errors accumulated during quantum phase estimation routines, referred to herein as verified quantum phase estimation.

The invention is set out in the appended set of claims.

The subject matter described in this specification can be implemented in particular ways so as to realize one or more of the following advantages.

The presently described techniques enable errors accumulated during quantum phase estimation routines to be mitigated. In particular, by post-selecting the system register to be in the starting state, all single errors are converted prior to final measurement to a time-dependent decay (up to on average exponentially small corrections), which may be accurately corrected for at the cost of additional measurement. Further, by separating the observable of interest into a linear combination of fast-forwardable Hamiltonians and measuring those components individually, the time-dependent decay can be converted into a constant offset. The presently described techniques therefore increase the accuracy of quantum phase estimation compared to conventional techniques that do not incorporate error mitigation.

In turn, the presently described techniques can be performed as a subroutine in various settings to provide additional mitigation of control error and increase the accuracy of other computational routines, e.g., to increase the accuracy of partial state tomography in a variational quantum eigensolver or any variational algorithm that takes an expectation value as a cost function.

In addition, in embodiments not falling under the scope of the claims, the presently described error mitigation techniques can be built into phase estimation techniques that do not require control qubits. Therefore, quantum phase accuracy can be achieved with lower hardware complexity.

In addition, the presently described protocols remain robust in the presence of sampling noise, with the number of repetitions required scaling approximately as one over the fidelity of the prepared state.

In addition, the presently described techniques enable eigenphases of a quantum state of a physical system to be accurately estimated and provided for use in an extensive number of computational applications of industrial value. For example, estimated eigenphases may be used to perform quantum simulations, e.g., quantum algorithms for simulating chemistry and molecular reactions, quantum metrology, spectroscopy, factoring algorithms, order finding algorithms, computations of discrete logarithms, database search algorithms, or solving well-conditioned sparse systems of linear equations.

The details of one or more implementations of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 depicts an example system for performing verified quantum phase estimation.
FIG. 2 is a flow diagram of a example process for single-control verified quantum phase estimation.
FIG. 3 is a circuit diagram of an example quantum circuit for single-control verified quantum phase estimation.
FIG. 4 is a flow diagram of an example process for control-free verified quantum phase estimation. This example process does not fall under the scope of the claims.
FIG. 5 is a circuit diagram of an example quantum circuit for control-free verified quantum phase estimation. This example quantum circuit does not fall under the scope of the claims.
**[00055]** FIG. 6 is a process diagram of an example protocol for single-control verified estimation of the expectation value of a Hamiltonian.

Like reference numbers and designations in the various drawings indicate like elements.

### DETAILED DESCRIPTION

Quantum phase estimation refers to a family of protocols for learning the eigenphases *e^{iϕj}* of an unitary operator *U.* Equivalently, quantum phase estimation can be used to learn the eigenvalues *Eⱼ* of a Hermitian operator *H* since such operators generate respective unitary operators via exponentiation *U = e^{iHt}.* The eigenvalues of *H* and the eigenphases of *U* are related by the same exponentiation and correspond to the same eigenstates, e.g., if *H*|*Eⱼ*〉 *= Eⱼ*|*Eⱼ*〉*, U*|*Eⱼ*〉 *= e^{iϕj}*|*Eⱼ*〉 and *ϕⱼ = Eⱼt.*

The unitary operator can be implemented as a quantum circuit on a quantum system register. Because *e^{iϕ}*|*ψ*〉 ≡ |*ψ*〉 for pure states |*ψ*〉 and real valued *ϕ*, the phase is undetectable if the system register is prepared in a pure state. However, a relative phase between two states is a physical observable that can be detected. Such detection can be achieved by single-control quantum phase estimation.

In single-control quantum phase estimation, the unitary operator is applied conditional upon a control qubit being in the state |1〉 (and doing nothing when the control qubit is in the state |0〉). This is commonly written as the "controlled" unitary *C - U.* When *C - U* acts on a system register prepared in an eigenstate and a control qubit prepared in a superposition state |+〉, the global state evolves to $\left(C-U\right) \frac{1}{\sqrt{2}} \left.\left(\left|0\right〉+\left|1\right〉\right)\right‖ \left.{E}_{j}\right〉 = \frac{1}{\sqrt{2}} \left(\left|0\right〉+{e}^{{iϕ}_{j}}\left|1\right〉\right) \left|{E}_{j}\right〉 .$ Despite the system register being acted upon, it remains unchanged, whilst the eigenphase *e^{iϕj}* from the system register is kicked back onto the control qubit. The eigenphase *e^{iϕj}* can be estimated by repeatedly performing the single control quantum phase estimation protocol, where at each repetition the control qubit is measured (in the *X* or *Y* basis) to obtain a number of single-shot readouts of 1 and 0. From the estimated eigenphase, an eigenvalue *Eⱼ* can be inferred, e.g., via $\frac{1}{it} Arg \left({e}^{{iϕ}_{j}}\right) = {E}_{j} mod 2 πt$.

The error in the estimation of *Eⱼ* decreases with t, and asymptotically optimal protocols can balance this against the ambiguity modulo 2*πt* by repeating the estimation at multiple values of *t.* In terms of estimating the eigenphases *e^{iϕj}* of a unitary *U,* this optimization requires repeating the procedure for controlled-*U^{k}* (e.g., *C - U^{k}*) for varying integer points *k*.

This specification describes an apparatus and method for verified quantum phase estimation. The apparatus and method implement a post-selection mechanism that enables errors accumulated during quantum phase estimation to be mitigated. That is, by measuring qubits in a system register in a basis that includes the initial state in which the qubits were prepared, and post-selecting on those phase estimation experiments which find the system register state to have returned to the initial state, a system implementing the presently described techniques is able to verify against any errors that take the system away from this state. Accordingly, the presently described quantum phase estimation protocols are referred to herein as verified quantum phase estimation protocols.

### Example Operating Environment

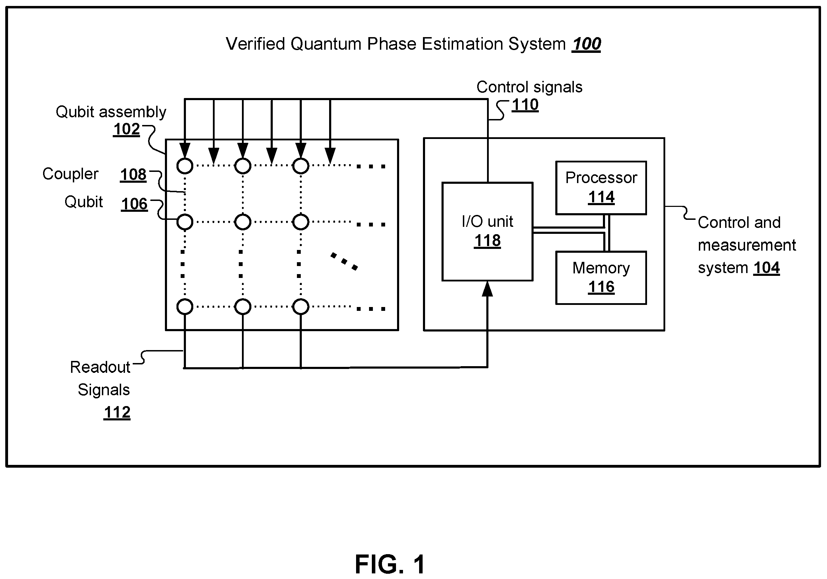

FIG. 1 depicts an example system 100 for performing verified quantum phase estimation. The example system 100 is an example of a system implemented as classical and quantum computer programs on one or more classical computers and quantum computing devices in one or more locations, in which the systems, components, and techniques described below can be implemented.

The example system can be used to perform the classical and quantum computation operations described in this specification according to some implementations. The example system 100 is intended to represent various forms of quantum computing devices. The components shown here, their connections and relationships, and their functions, are exemplary only, and do not limit implementations of the inventions described and/or claimed in this document.

The example system 100 includes a qubit assembly 102 and a control and measurement system 104. The qubit assembly includes multiple qubits, e.g., qubit 106, that are used to perform algorithmic operations or quantum computations. While the qubits shown in FIG. 1 are arranged in a rectangular array, this is a schematic depiction and is not intended to be limiting. The qubit assembly 102 also includes adjustable coupling elements, e.g., coupler 108, that allow for interactions between coupled qubits. In the schematic depiction of FIG. 1, each qubit is adjustably coupled to each of its four adjacent qubits by means of respective coupling elements. However, this is an example arrangement of qubits and couplers and other arrangements are possible, including arrangements that are non-rectangular, arrangements that allow for coupling between non-adjacent qubits, and arrangements that include adjustable coupling between more than two qubits. In addition, in some cases qubits may not be coupled by/interact through physical coupling elements. For example, ion traps can couple qubits via their longitudinal motion. Therefore, in some cases couplings between qubits can be driven, e.g., using a laser, and not achieved through a coupling element. Generally, the type of couplings used depends on the type of qubits used and/or the type of quantum computations to be performed.

Each qubit can be a physical two-level quantum system or device having levels representing logical values of 0 and 1. The specific physical realization of the multiple qubits and how they interact with one another is dependent on a variety of factors including the type of the quantum computing device included in example system 100 or the type of quantum computations that the quantum computing device is performing. For example, in an atomic quantum computer the qubits may be realized via atomic, molecular or solid-state quantum systems, e.g., hyperfine atomic states. As another example, in a superconducting quantum computer the qubits may be realized via superconducting qubits or semi-conducting qubits, e.g., superconducting transmon states. As another example, in a NMR quantum computer the qubits may be realized via nuclear spin states.

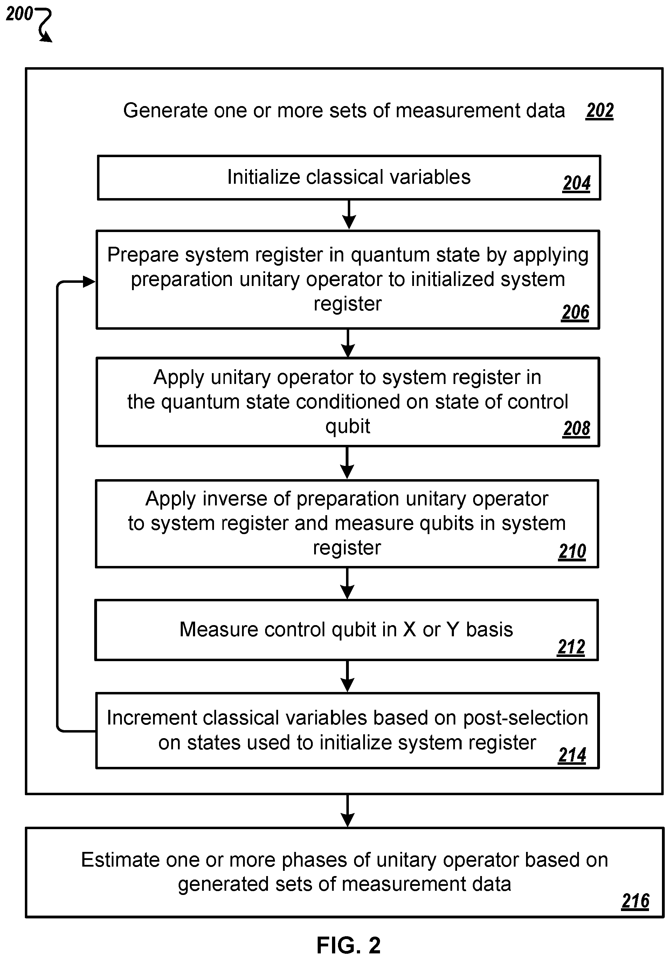

In some implementations a quantum computation can proceed by initializing the qubits in a selected initial state and applying unitary operators to the qubits, e.g., the unitary operators *U, Uₚ* described below with reference to FIGS. 2-6. Applying a unitary operator to a quantum state can include applying a corresponding sequence of quantum logic gates to the qubits, e.g., a applying a corresponding quantum circuit to the qubits. Example quantum logic gates include single-qubit gates, e.g., Pauli-X, Pauli-Y, Pauli-Z (also referred to as X, Y, Z), Hadamard and S gates, two-qubit gates, e.g., controlled-X, controlled-Y, controlled-Z (also referred to as CX, CY, CZ), and gates involving three or more qubits, e.g., Toffoli gates. The quantum logic gates can be implemented by applying control signals 110 generated by the control and measurement system 104 to the qubits and to the couplers.

For example, in some implementations the qubits in the qubit assembly 102 can be frequency tuneable. In these examples, each qubit can have associated operating frequencies that can be adjusted through application of voltage pulses via one or more drive-lines coupled to the qubit. Example operating frequencies include qubit idling frequencies, qubit interaction frequencies, and qubit readout frequencies. Different frequencies correspond to different operations that the qubit can perform. For example, setting the operating frequency to a corresponding idling frequency may put the qubit into a state where it does not strongly interact with other qubits, and where it may be used to perform single-qubit gates. As another example, in cases where qubits interact via couplers with fixed coupling, qubits can be configured to interact with one another by setting their respective operating frequencies at some gate-dependent frequency detuning from their common interaction frequency. In other cases, e.g., when the qubits interact via tuneable couplers, qubits can be configured to interact with one another by setting the parameters of their respective couplers to enable interactions between the qubits and then by setting the qubit's respective operating frequencies at some gate-dependent frequency detuning from their common interaction frequency. Such interactions may be performed in order to perform multi-qubit gates.

The type of control signals 110 used depends on the physical realizations of the qubits. For example, the control signals may include RF or microwave pulses in an NMR or superconducting quantum computer system, or optical pulses in an atomic quantum computer system.

A quantum computation can be completed by measuring the states of the qubits, e.g., using a quantum observable such as X or Z, using respective control signals 110. The measurements cause readout signals 112 representing measurement results to be communicated back to the measurement and control system 104. The readout signals 112 may include RF, microwave, or optical signals depending on the physical scheme for the quantum computing device and/or the qubits. For convenience, the control signals 110 and readout signals 112 shown in FIG. 1 are depicted as addressing only selected elements of the qubit assembly (i.e. the top and bottom rows), but during operation the control signals 110 and readout signals 112 can address each element in the qubit assembly 102.

The control and measurement system 104 is an example of a classical computer system that can be used to perform various operations on the qubit assembly 102, as described above, as well as other classical subroutines or computations, e.g., the classical processing/post processing routines described below with reference to FIGS. 2-6. The control and measurement system 104 includes one or more classical processors, e.g., classical processor 114, one or more memories, e.g., memory 116, and one or more I/O units, e.g., I/O unit 118, connected by one or more data buses. The control and measurement system 104 can be programmed to send sequences of control signals 110 to the qubit assembly, e.g. to carry out a selected series of quantum gate operations, and to receive sequences of readout signals 112 from the qubit assembly, e.g. as part of performing measurement operations.

The processor 114 is configured to process instructions for execution within the control and measurement system 104. In some implementations, the processor 114 is a single-threaded processor. In other implementations, the processor 114 is a multi-threaded processor. The processor 114 is capable of processing instructions stored in the memory 116.

The memory 116 stores information within the control and measurement system 104. In some implementations, the memory 116 includes a computer-readable medium, a volatile memory unit, and/or a non-volatile memory unit. In some cases, the memory 116 can include storage devices capable of providing mass storage for the system 104, e.g. a hard disk device, an optical disk device, a storage device that is shared over a network by multiple computing devices (e.g., a cloud storage device), and/or some other large capacity storage device.

The input/output device 118 provides input/output operations for the control and measurement system 104. The input/output device 118 can include D/A converters, A/D converters, and RF/microwave/optical signal generators, transmitters, and receivers, whereby to send control signals 110 to and receive readout signals 112 from the qubit assembly, as appropriate for the physical scheme for the quantum computer. In some implementations, the input/output device 118 can also include one or more network interface devices, e.g., an Ethernet card, a serial communication device, e.g., an RS-232 port, and/or a wireless interface device, e.g., an 802.11 card. In some implementations, the input/output device 118 can include driver devices configured to receive input data and send output data to other external devices, e.g., keyboard, printer and display devices.

### Programming the hardware: example process for single-control verified quantum phase estimation

FIG. 2 is a flowchart of an example process 200 for single-control verified quantum phase estimation of a *N*-qubit unitary operator *U* on a quantum state |*ψ*〉. For convenience, the process 200 will be described as being performed by a system of one or more classical and quantum computing devices located in one or more locations. For example, the system 100 of FIG. 1, appropriately programmed in accordance with this specification, can perform the process 200.

For convenience, example process 200 is primarily described with reference to single-control verified quantum phase estimation of a *N*-qubit unitary operator *U* in the Hermitian operator picture. In the Hermitian operator picture, the unitary operator *U* is equal to a time evolution operator generated by an N-qubit Hamiltonian *H*, e.g., $U = U \left(t\right) = {e}^{iHt} ,$ (1) and example process 200 can be applied to learn the eigenphases *e^{iEjt}* or eigenvalues *Eⱼ* of the Hamiltonian *H*. However, this is a non-limiting example and example process 200 can also be applied to perform single-control verified quantum phase estimation of a unitary operator *U* in the unitary picture.

The system generates one or more sets of measurement data, where the data included in the one or more sets will be used to estimate the eigenphases/eigenvalues of the unitary operator *U* (step 202).

In some implementations the system can generate one set of measurement data, where the set corresponds to a respective value of t (or equivalently an integer *k*). However, as described above, errors in estimated eigenvalues decreases with *t*, and asymptotically optimal protocols can balance this against the ambiguity modulo 2*πt* by repeating the estimation at multiple values of *t* (or in the case of the unitary picture, repeating the estimation for controlled-*U^{k}* for multiple values of integer *k*). Therefore, in other implementations the system can generate multiple sets of measurement data, where each set of measurement data corresponds to a respective value of *t* from a predetermined range or interval (or equivalently a number *k* from a predetermined range or interval). In these implementations, the number of generated sets of measurement data, e.g., the number of different values of *t*, is selected to allow a sufficient number of phases to be fit to the data. For example, a first value *t*₀ for which no ambiguity exists can first be selected (such a value can always be selected since it is possible to find an upper bound on the size of the eigenvalues). An example data set of values of t can then be selected based on the first value *t*₀, e.g., {*t*₀, 2*t*₀, 3*t*₀, 4*t*₀, ... }(i.e. linear spacing) or {*t*₀, 2*t*₀, 4*t*₀. 8*t*₀ ... } (i.e., exponential separation between the values, which in some situations can be preferable.)

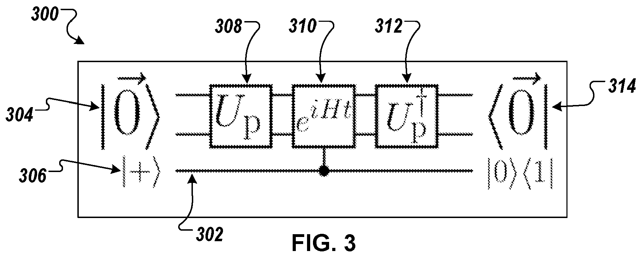

Generating each set of measurement data includes preparing (or initializing) a first and second classical initial variable, e.g., a first classical initial variable *g^{x}* = 0 and a second classical initial variable *g^{y}* = 0 (step 204) and repeatedly performing a same phase estimation experiment, where at each repetition one of the classical initial variables is incremented based on a measured outcome of the phase estimation experiment. The number of repetitions is selected such that the corresponding set of measurement data includes sufficient statistics for estimating the eigenphases/eigenvalues of the unitary operator. To perform one repetition of the phase estimation experiment, the system implements a quantum circuit, e.g., the quantum circuit shown in FIG. 3, as follows.

The system prepares a system register of *N* qubits in the quantum state |*ψ*〉 (step 206). In some implementations the quantum state |*ψ*〉 includes a linear combination of one or more eigenstates |*E*〉 of the *N*-qubit Hamiltonian *H*, where each eigenstate |*Eⱼ*〉 in the linear combination comprises an associated amplitude *aⱼ.* For example, the quantum state can be given by $\left|ψ\right〉 = {\sum }_{j} {a}_{j} \left|{E}_{j}\right〉 .$ (2)

Preparing the system register in the quantum state includes preparing each qubit in the system register in a target computational state, e.g., a zero state, and applying a preparation unitary operator *Uₚ* to the qubits in the target computational state. The preparation unitary operator *Uₚ* is selected so that application of the preparation unitary operator to the qubits prepared in the target computational basis state causes the system register to be in the quantum state |*ψ*〉, e.g., *Uₚ*|0〉 = |*ψ*〉. The particular form of the preparation unitary operator is dependent on the unitary operator/Hamiltonian for which quantum phase estimation is being performed, as well as the quantum hardware that is being used to perform quantum phase estimation. For example, for free-fermion Hamiltonians the preparation unitary operator *Uₚ* can be represented by a Givens rotation circuit.

The system prepares a control qubit in a superposition state, e.g., a plus state. The system then applies, conditioned on a state of a control qubit, the unitary operator *U* a number of times to the system register in the quantum state |*ψ*〉 to generate an evolved quantum state (step 208). More specifically, in the Hermitian operator picture, the system applies the time evolution operator *U(t) = e^{iHt}* to the system register in the quantum state |*ψ*〉 to generate an evolved quantum state, where the value of t depends on the set of measurement data that is currently being generated. In the unitary picture, the system applies *U^{k}* to the system register in the quantum state |*ψ*〉 to generate an evolved quantum state, where the integer value of k depends on the set of measurement data that is currently being generated. In some implementations, the system can apply the unitary operator *U* conditioned on the control qubit being in a 1 state.

The system applies an inverse of the preparation unitary operator, e.g., ${U}_{p}^{†}$, to the system register in the evolved quantum state and measures each qubit in the system register to determine an output quantum state of the system register (step 210). In some implementations measuring each qubit in the system register to determine an output quantum state of the system register includes measuring each qubit in the system register in the X or Y basis.

The system measures the control qubit to obtain a corresponding measurement result *m* ∈ 0, 1 (step 212). Measuring the control qubit to obtain a corresponding measurement result includes either rotating the control qubit into the X basis and measuring the qubit in the X basis or rotating the control qubit into the Y basis and measuring the qubit in the Y basis.

The system post-selects on the target computational basis state used to prepare the qubits in the system register at step 206 (step 214). To post-select on the target computational basis state, the system determines whether the output quantum state indicates that each qubit was in the target computational basis state prior to measurement or not. For example, in implementations where each qubit in the system register is prepared in a zero state (prior to application of the preparation unitary operator *Uₚ*), the system can determine whether the output quantum state of the system register indicates that each qubit was measured to be in the zero state or not.

In response to determining that the output quantum state does indicate that each qubit was in the target computational basis state prior to measurement, the system increments a respective classical variable by (-1)*^{m}*. For example, if the control qubit was rotated into the X basis and measured in the X basis to obtain a measurement result *m* = 0, the system increments the first classical variable *g^{x}* by (-1)⁰ = 1. If the control qubit was rotated into the X basis and measured in the X basis to obtain a measurement result *m* = 1, the system increments the first classical variable *g^{x}* by (-1)¹ = -1. Similarly, if the control qubit was rotated into the Y basis and measured in the Y basis to obtain a measurement result m, the system increments the second classical variable *g^{y}* by (-1)*^{m}*.

In response to determining that the output quantum state does not indicate that each qubit was in the target computational basis state prior to measurement, the system discards the current repetition of the phase estimation experiment (in other words, the system increments a respective classical variable by (0)*^{m}*) and performs a next repetition of the phase estimation experiment (or alternatively, if the current repetition is a last repetition, proceeds to step 216).

The system estimates one or more phases, amplitudes or expectation values of the unitary operator *U* based on the generated one or more sets of measurement data (step 216). The system can estimate phases, amplitudes or expectation values of the unitary operator *U* by estimating one or more phase functions of the unitary operator *U(t) = e^{iHt},* where each phase function *g*(*t*) corresponds to a respective value of *t* and is therefore based on a respective set of measurement data. The phases, amplitudes or expectation values of the unitary operator *U* can then be inferred classically from the estimated phase functions *g*(*t*). For example, the one or more phase functions can be processed, e.g., using classical signal processing techniques, to obtain approximations to eigenvalues (energies) of the Hamiltonian that generates the time evolution operator, e.g., to obtain approximations to eigenvalues corresponding to the eigenstates |*Eⱼ*〉 and associated amplitudes *aⱼ* included in the quantum state |*ψ*〉 = ∑*ⱼaⱼ*|*Eⱼ*〉.

Each phase function *g*(*t*) is defined as a linear combination of one or more phases of the unitary operator, where each phase in the linear combination i) is associated with a respective eigenstate of the one or more eigenstates of the Hamiltonian included in the quantum state |*ψ*〉 and ii) is weighted by a square of the amplitude associated with the respective eigenstate. That is, the phase function can be given by $g \left(t\right) = {\sum }_{j} {\left|{a}_{j}\right|}^{2} {e}^{{iE}_{j} t} .$ (3)

Therefore, to estimate a respective phase function g(t), the system computes i) the value of the first classical variable *g^{x}* in the set of measurement data corresponding to t divided by the total number of times that the control qubit was measured in the X basis added to ii) i multiplied by the value of the second classical variable *g^{y}* in the set of measurement data corresponding to t divided by the total number of times that the control qubit was measured in the Y basis. That is, the system computes ${g}^{˜} \left(t\right) = \frac{{g}^{x}}{{M}_{x}} + i \frac{{g}^{y}}{{M}_{y}} .$ (4) and estimates *g*(*t*) by *g̃*(*t*). In Equation (4) *Mₓ* represents the total number of times the control qubit was measured in the X basis at step 212 and *M_{y}* represents the total number of times the control qubit was measured in the Y basis at step 212.

Since the determined phase functions can be noisy approximations of exact phase functions of the first unitary operator, in some implementations the system may apply a normalization condition Σ*ⱼ*|*aⱼ*|² = 1 to the amplitudes associated with the respective eigenstates to renormalize the weights in the phase functions.

The error mitigation from verification comes at the cost of increasing the number of samples required to estimate the phase function g(t). Estimating the phase function to precision *ε* requires that the determined (noisy) approximation of the exact phase function is estimated to precision *Pₙₑε* where *pₙₑ* represents the probability of no error occurring. To obtain *g^{x}* and *g^{y}* above in Equation (4) a set of M experimental outputs (which can take the values -1, 0 or 1) are averaged over. For an i-th experiment $P \left({g}_{i}^{x}=\pm 1\right) = \frac{1}{2} {p}_{ne} \left(1\pm {g}^{x}\right)$ and $P \left({g}_{i}^{x}=0\right) = 1 - {p}_{ne}$. The noisy approximation *gₙₒᵢₛₑ* of the exact phase function is then given by $Re \left[{g}_{noise}\left(t\right)\right] = P \left({g}_{x}^{i}=1\right) - P \left({g}_{x}^{i}=-1\right)$ . Since each experiment is i.i.d, the variance of the estimates of these probabilities gives $Var \left[Re\left[{g}_{noise}\left(t\right)\right]\right] = \frac{1}{M} {p}_{ne} - \frac{1}{M} {p}_{ne}^{2} {\left[{g}^{x}\right]}^{2}$. The requirements to estimate *gₙₒᵢₛₑ* to variance ${ϵ}^{- 2} {p}_{ne}^{- 2}$ can therefore bounded by $M \geq {ϵ}^{- 2} {p}_{ne}^{- 1}$.

In some implementations, to mitigate control noise, e.g., the effect of an amplitude damping channel, the initial state of the control qubit can be flipped from the 0 state to the 1 state for 50% of the experiments. This can be compiled into the final pre-rotation, and does not increase the total sampling cost of the experiment (only half as many samples need to be taken at each pre-rotation setting for the same accuracy. Similar biases from other channels can be compensated for by compiling a $\frac{π}{4} Z$ rotation on the initial control qubit state, and un-compiling it in the final pre-rotation.

The techniques described above with reference to example process 200 can also be applied to mitigate errors in other settings, e.g., settings other than phase estimation. For example, the techniques can be applied to a method for quantum error mitigation in a quantum computing system. In such methods, the system generates a set of classical control data including at least one classical variable by repeating a plurality of iterations. At each iteration the system i) prepares a system register including multiple qubits in an initial quantum state, ii) applies a unitary operator to the system register in the initial quantum state to obtain a first evolved quantum state, where the unitary operator is dependent on a target quantum computation, iii) performs, conditioned on a state of a control qubit initialized in a superposition state, the target quantum computation on the system register in the first evolved quantum state to obtain a second evolved quantum state, iv) applies an inverse of the unitary operator to the system register in the second evolved quantum state to obtain a third evolved quantum state, v) measures a) each qubit in the system register in the third evolved quantum state to determine an output quantum state of the system register and b) the control qubit to determine an output quantum state of the control qubit, and vi) updates the at least one classical variable using the output quantum state of the control qubit unless the output quantum state of the system register indicates that the system register was not in the initial quantum state prior to measurement. After the plurality of iterations have been completed, the system changes an operating parameter of the quantum computing system or adjusts a measured value based on the set of classical control data, e.g., to account for errors detected through analysis of the control data.

FIG. 3 is a circuit diagram 300 of an example quantum circuit for single-control verified quantum phase estimation. In the example quantum circuit, the top two horizontal lines represent the system register of N qubits. The bottom horizontal line 302 represents the control qubit. The system register is prepared in a zero state 304, that is each qubit in the system register is prepared in a zero state. The control qubit 302 is prepared in a plus state 306. The preparation unitary operator 308 is applied to the system register. The unitary operator (or time evolution operator generated by the Hamiltonian) 310 is applied to the system register, conditioned on the state of the control qubit 302. An inverse of the preparation unitary operator 312 is applied to the system register.

The circuit output shows an ideal circuit output, e.g., an output corresponding to error-free implementations of the preparation unitary operator and time evolution operator. That is, the system register is shown to be in the zero state 314 after the inverse of the preparation unitary is applied. The control qubit 302 can be measured to determine the phase of the unitary operator 310.

### Programming the hardware: example process for verified control-free phase estimation

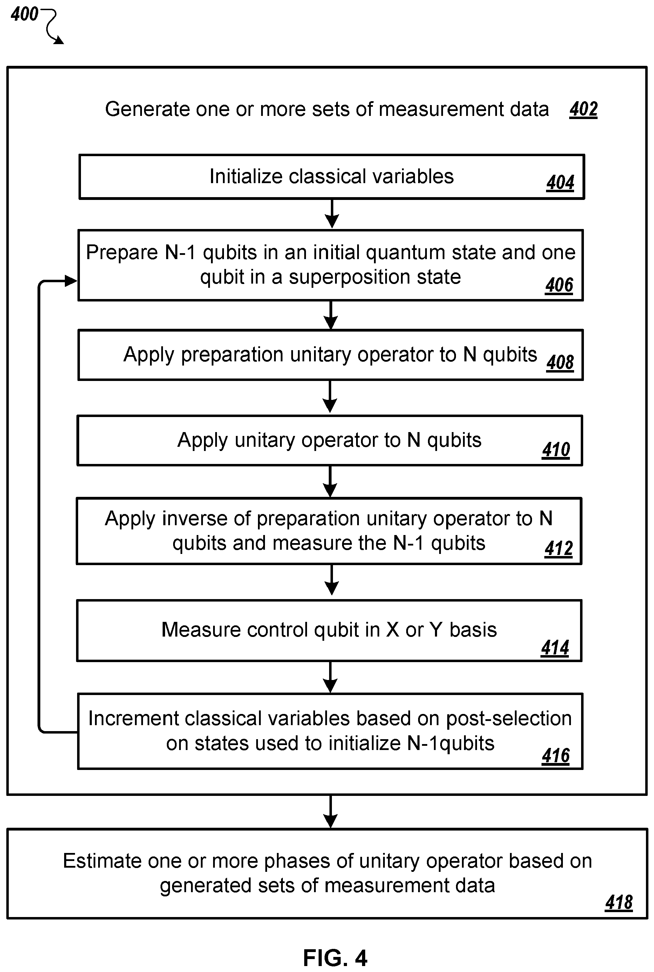

Making time evolution conditional on a control qubit does not increase the asymptotic cost of the circuit, but it does require an additional overhead. FIG. 4 is a flow diagram 400 of an example process for control-free verified quantum phase estimation of a N-qubit unitary operator U on a quantum state |*ψ*〉. For convenience, the process 400 will be described as being performed by a system of one or more classical and quantum computing devices located in one or more locations. For example, the system 100 of FIG. 1, appropriately programmed in accordance with this specification, can perform the process 400.

As described above with reference to example process 200 of FIG. 2, example process 400 is described with reference to performing verified quantum phase estimation of a *N*-qubit unitary operator *U* in the Hermitian operator picture. However, this is a non-limiting example and example process 400 can also be applied to perform verified quantum phase estimation of a *N*-qubit unitary operator *U* in the unitary picture.

The system generates one or more sets of measurement data (step 402) and initializes a first and second classical variable (step 404). Steps 402 and 404 of example process 400 are similar to steps 202 and 204 of example process 200. Therefore, for the sake of brevity, details are not repeated.

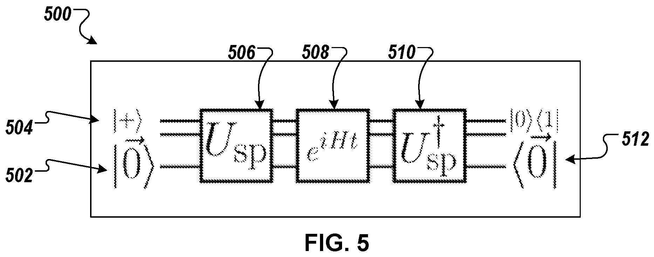

As described above with reference to step 202 of example process 200, generating each set of measurement data includes repeatedly performing a phase estimation experiment. To perform one repetition of the phase estimation experiment, the system implements a quantum circuit, e.g., the quantum circuit shown in FIG. 5, as follows.

The system prepares a register of *N* qubits in an initial quantum state (step 406). Preparing the system register in the quantum state includes preparing *N* - 1 qubits in a target computational basis state, e.g., a zero state, and an *N*-th qubit in a superposition state, e.g., a plus state through application of a Hadamard gate. The register is then in the state $1 / \sqrt{2} \left(\left|0\right〉+\left|{\vec{1}}_{T}\right〉\right)$ where |1̅*_{T}*〉 represents the basis state where the target qubit is in the |1〉 state and all other qubits are in |0〉.

The system applies an N-qubit preparation unitary operator *Uₚ* to the register in the initial quantum state to obtain a superposition state (step 408). The obtained superposition state is a superposition of the quantum state |*ψ*〉 and an eigenstate |*Eⱼ*〉 of the Hamiltonian H, e.g., $\frac{1}{√ 2} \left(\left|ψ\right〉+\left|{E}_{j}\right〉\right)$. The N-qubit preparation unitary operator *Uₚ* performs the mapping *Uₚ*|0〉 ↦ |Ψ*ᵣ*〉*, Uₚ*|1̅*_{T}*〉 *↦* |Ψ*ₛ*〉 where |Ψ*ₛ*〉 = |*ψ*〉|1〉 and |Ψ*ᵣ*〉 = |*ψ*〉|0〉 with |*ψ*〉 as defined in Equation (2) above. After step 406 and 408, the register is in the state $\frac{1}{√ 2} \left(\left|{Ψ}_{s}\right〉+\left|{Ψ}_{r}\right〉\right)$. As discussed above, the particular form of the preparation unitary operator is dependent on the unitary operator/Hamiltonian for which quantum phase estimation is being performed, as well as the quantum hardware that is being used to perform quantum phase estimation. For example, for free-fermion Hamiltonians the preparation unitary operator *Uₚ* can be represented by a Givens rotation circuit, e.g., ${U}_{p} = U \left(\vec{θ}\right) {\prod }_{j = {N}_{f} - 1}^{1} {CNOT}_{j - 1 , j}$ where $U \left(\vec{θ}\right) = exp \left(i{\sum }_{j , l} {\vec{θ}}_{j , l} {c}_{j}^{†} {c}_{l}\right)$ with ${c}_{j}^{†}$, *cⱼ* representing creation and annihilation operators for a fermion on site j, *θ̅_{j,l} = θ̅_{l,j}* are system parameters, *N_{f}* represents the number of qubits, and *CNOT*_{*j*-1,*j*} represents a CNOT gate acting on qubits *j -* 1,*j*.

The system applies the unitary operator *U* a number of times to the register in the superposition state to generate an evolved superposition state (step 410). Step 410 is similar to step 208 of example process 200, except that application of the unitary operator is not conditioned on the state of a control qubit. Therefore, for brevity, further details are not repeated.

The system applies an inverse of the *N*-qubit preparation unitary operator to the register in the evolved superposition state and measures each of the *N* - 1 qubits in the register to determine an output states of the *N* - 1 qubits (step 412). Step 412 is similar to step 210 of example process 200 and further details are not repeated.

The system measures the *N*-th qubit to obtain a corresponding measurement result *m* ∈ 0, 1 (step 414). Measuring the *N*-th qubit to obtain a corresponding measurement result includes either rotating the N-th qubit into the X basis and measuring the qubit in the X basis or rotating the *N*-th qubit into the Y basis and measuring the qubit in the Y basis.

The system post-selects on the target computational basis state used to prepare the *N* - 1 qubits in the register at step 404 (step 416). Step 412 is similar to step 210 of example process 200. That is, to post-select on the target computational basis state, the system determines whether the output quantum states of the *N* - 1 qubits indicate that each of the *N* - 1 qubits were in the target computational basis state prior to measurement or not. In response to determining that the output quantum states of the *N -* 1 qubits do indicate that each of the *N -* 1 qubits were in the target computational basis state prior to measurement, the system increments a respective classical initial variable by (-1)*^{m}*. For example, if the N-th qubit was rotated into the X basis and measured in the X basis to obtain a measurement result m, the system increments the first classical initial variable *g^{x}* by (-1)*^{m}*. Similarly, if the N-th qubit was rotated into the Y basis and measured in the Y basis to obtain a measurement result m, the system increments the second classical initial variable *g^{y}* by (-1)*^{m}*. In response to determining that the output quantum states of the *N -* 1 qubits do not indicate that each of the *N -* 1 qubits were in the target computational basis state prior to measurement, the system discards the current repetition of the phase estimation experiment and performs a next repetition of the phase estimation experiment (or alternatively proceeds to step 418). For the sake of brevity, further details are not repeated.

The system estimates one or more phases of the unitary operator U based on the generated one or more sets of measurement data (step 418). Step 418 of example process 400 is similar to step 216 of example process 200. Therefore, for the sake of brevity, details are not repeated.

The techniques described above with reference to example process 400 can also be applied to mitigate errors in other settings, e.g., settings other than phase estimation. For example, the techniques can be applied to a method for quantum error mitigation in a quantum computing system. In such methods, the system generates a set of classical control data including at least one classical variable by repeating a plurality of iterations. At each iteration the system i) prepares a system register comprising multiple qubits in an initial quantum state, ii) applies a unitary operator to the system register in the initial quantum state to obtain a first evolved quantum state, where the unitary operator is dependent on a target quantum computation, iii) performs the target quantum computation on the system register in the first evolved quantum state to obtain a second evolved quantum state, iv) applies an inverse of the unitary operator to the system register in the second evolved quantum state and measures each qubit in the system register to determine an output quantum state of the system register, and v) after applying the inverse of the unitary operator, updates the at least one classical variable using the output quantum state of the system register unless the output quantum state indicates that the system register was not in the initial quantum state prior to measurement. After the plurality of iterations have been completed, the system changes an operating parameter of the quantum computing system or adjusts a measured value based on the set of classical control data, e.g., to account for errors detected through analysis of the control data.

FIG. 5 is a circuit diagram 500 of an example quantum circuit for control-free verified quantum phase estimation. In the example quantum circuit, the horizontal lines represent the register of *N* qubits. The top horizontal line represents the *N*-th qubit. The middle and bottom horizontal lines represent the *N -* 1 qubits. The *N -* 1 qubits are each prepared in a zero state 502. The N-th qubit is prepared in a plus state 504. The preparation unitary operator 506 is applied to the register. The unitary operator (or time evolution operator generated by the Hamiltonian) 508 is applied to the register. An inverse of the preparation unitary operator 510 is applied to the register. The circuit output shows an ideal circuit output, e.g., an output corresponding to error-free implementations of the preparation unitary operator and time evolution operator. That is, the *N* - 1 qubits are shown to be in the zero state 512 after the inverse of the preparation unitary is applied. The N-th qubit can be measured to determine the phase of the unitary operator 508.

### Programming the hardware: example process for verified expectation value estimation

In some implementations an estimation of the eigenvalues of a Hermitian operator H may not be of interest, but instead its expectation value 〈*H*〉 under a specified quantum state |*ψ*〉. For example, in a variational quantum eigensolver (VQE), a state |*ψ*(*θ̅*)〉 *= U*(*θ̅*)|*0*〉 is prepared, where *θ̅* represents a set of classical input parameters. The expectation value *E*(*θ̅*) *=* 〈*ψ*(*θ̅*)|*H*|*̅ψ̅*̅(̅*̅θ̅*̅)〉 is then measured. The measurement result is optimized (e.g. minimized) over *θ̅* in a classical outer loop (e.g. using a classical optimization routine, such as gradient descent, to iteratively adjust the values of *θ̅*), where the optimized state |*ψ*(*θ̅ₒₚₜ*)〉 provides an approximation of the true ground state |*E*₀〉. Typically, 〈*ψ*(*θ̅*)|*H*|*ψ*(*θ̅*)〉 is estimated by means of partial state tomography. However, noise in the preparation unitary *U*(*θ̅*) causes an error-full state *_{Perror}*(*θ̅*) *≠* |*ψ*(*θ̅*)〉〈*ψ*(*θ̅*)| to be prepared and tomographed, propagating the preparation error directly to a final estimation error.

The techniques described in example processes 200 and 400 provide an improvement to the state of the art, and can mitigate errors in the preparation unitary *Uₚ.* Therefore, because the amplitude and eigenvalue data obtained from example process 200 (or example process 400) allow for the reconstruction of the expectation values $\left〈ψ\left(\vec{θ}\right)\left|H\right|ψ\left(\vec{θ}\right)\right〉 = {\sum }_{j} {\left|{a}_{j}\right|}^{2} {E}_{j} ,$ verified phase estimation can be used as a tool for error mitigated state tomography within a VQE. Combining the presently described techniques with such variational routines can also allow for mitigation of various sources of control error that may not be correctable by the presently described techniques.

To determine an expectation value of a Hamiltonian on a quantum state |*ψ*〉, the system separates the Hamiltonian into a linear combination of diagonalizable sub-Hamiltonians, e.g., *H =* Σ*_{b} H_{b}.* In some implementations the system can choose one or more of the sub-Hamiltonians to be fast-forwardable, e.g., a Hamiltonian for which a circuit implementation of a time evolution operator generated by the Hamiltonian has constant depth in the time t. Selecting fast-forwardable sub-Hamiltonians can further mitigate error. Although fast-forwarding is not possible for arbitrary H, decomposition of any sparse, row-computable H into a linear combination of polynomially many fast-forwardable Hamiltonians is always possible. For example, the N qubit Pauli operators *Pᵢ* ∈ {*I, X, Y, Z*}^{⊗*N*} form a basis for the set of all N qubit operators and are themselves fast forwardable.

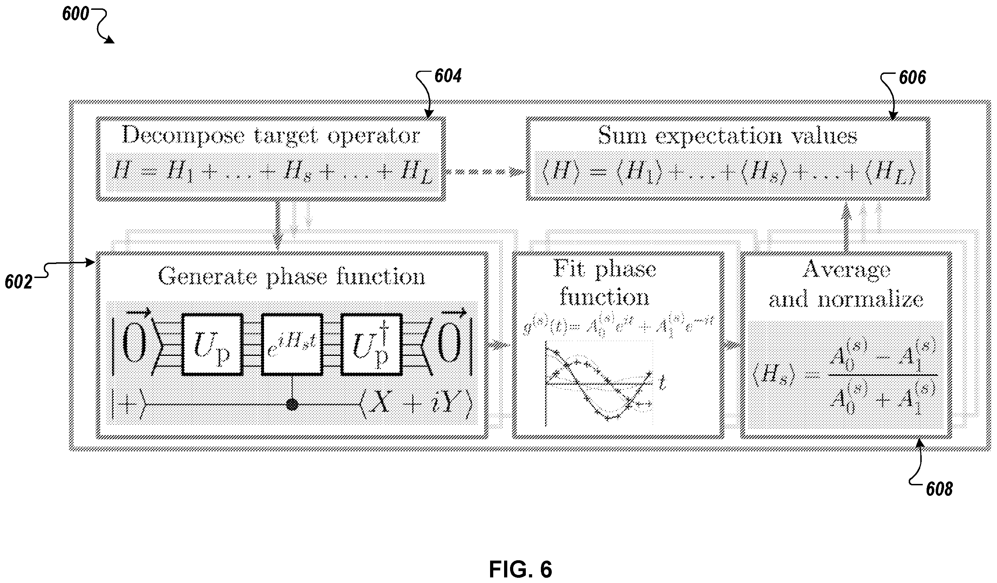

The system then performs steps 202 - 214 (or steps 402 - 416) for each time evolution operator generated by a respective sub-Hamiltonian *H_{b}* to determine respective expectation values of the sub-Hamiltonians. In some implementations the system can perform steps 202 - 214 (or steps 402 - 416) for each time evolution operator generated by a respective sub-Hamiltonian *H_{b}* in parallel. The system can then sum the determined expectation values of the sub-Hamiltonians to obtain an expectation value of the Hamiltonian, e.g., *〈H〉 =* Σ*_{b}*〈*H_{b}*〉*.* An example process for determining an expectation value of a Hamiltonian on a quantum state is illustrated and described below with reference to FIG. 6.

In some implementations, instead of analysing estimated phase functions at different values of t, as described above with reference to step 216, the system can determine an expectation value of a Hamiltonian on a quantum state |*ψ*〉 by expanding $\begin{matrix}Im \left[g\left(t\right)\right] = {\sum }_{j} {\left|{a}_{j}\right|}^{2} sin \left({E}_{j}t\right) \\ = t {\sum }_{j} {\left|{a}_{j}\right|}^{2} {E}_{j} + \frac{1}{3} {t}^{3} {\sum }_{j} {\left|{a}_{j}\right|}^{2} {E}_{j}^{3} + O \left({t}^{5}\right)\end{matrix}$ to obtain $\frac{1}{t} Im \left[g\left(t\right)\right] = \left〈ψ\left(\vec{θ}\right)\left|H\right|ψ\left(\vec{θ}\right)\right〉 + O \left({t}^{2}\right)$ and estimating *Im(g(t))* for short times t. In these implementations, normalization is performed by implementing a normalization condition that *g*(0) = ∑*ⱼ*|*aⱼ*|² to obtain $\left〈M\right〉 = \frac{Im \left[g\left(t\right)\right]}{t \left|g\left(0\right)\right|} + O \left({t}^{2}\right) .$ (5)

FIG. 6 is a process diagram 600 of an example protocol for verified estimation of the expectation value of a Hamiltonian *H = H*₀ *+ H*₁ + ··· *H_{N}* on a quantum state |*ψ*〉 = *Uₚ*|0〉. Boxes 602 represent circuits to be executed or data to be extracted from a quantum computer. Boxes 604, 606, and 608 represent signal details to be estimated via classical post-processing.

The protocol proceeds as follows: a complex Hamiltonian *H* is split into a number of fast-forwardable summands *Hₛ* (box 604). The spectral function *g*(*t*) of |*ψ*〉 under time evolution of each piece is obtained (box 602) via single control verified quantum phase estimation (although control-free verified quantum phase estimation could also be used). The resulting data is a weighted sum of oscillations with frequencies equal to the eigenvalues ${E}_{j}^{\left(s\right)}$ of the corresponding factor (box 610), and may be decomposed by a variety of classical post-processing techniques to obtain approximations for the expectation values 〈*Hₛ*〉, depending on the type of *Hₛ* chosen. The type of classical post-processing technique can depend on the type of *Hₛ* chosen (box 608). Regardless of the method used, the expectation values are rescaled to obey a normalization condition. Because the expectation value is linear, the obtained verified estimates of 〈*Hₛ*〉 may be summed together to give a verified estimate for 〈*H*〉 (box 606).

## Claims

1. A method for quantum phase estimation of a first *N*-qubit unitary operator on a quantum state, the method performed by a system comprising one or more classical processors and quantum computing hardware in data communication with the one or more classical processors, the method comprising:
initializing (204) a first classical variable and a second classical variable;
generating (202) a set of measurement data, comprising repeatedly performing a phase estimation experiment, wherein at each repetition a current value of one of the first or second classical variable is incremented based on a measured outcome of the phase estimation experiment and performing one repetition of the phase estimation experiment comprises:
preparing (206) a system register of the quantum computing hardware, the system register comprising *N* qubits, in the quantum state, comprising applying, by the quantum computing hardware, a second unitary operator (308) to the system register, wherein prior to application of the second unitary operator each qubit in the system register is initialized in a target computational basis state;
applying (208), by the quantum computing hardware and conditioned on a state of a control qubit (302), the first unitary operator (310) a number of times to the system register in the quantum state to generate an evolved quantum state, wherein prior to application of the first unitary operator said number of times the control qubit is initialized in a superposition state;
applying (210), by the quantum computing hardware, an inverse of the second unitary operator (312) to the system register in the evolved quantum state and measuring each qubit in the system register to determine an output quantum state of the system register;
measuring (212), by the quantum computing hardware, the control qubit in the X-basis or Y-basis to obtain a corresponding measurement result *m*; and
post-selecting (214) on the target computational basis state, comprising:
in response to determining that the output quantum state indicates that each qubit was in the target computational basis state prior to measurement, incrementing, by the one or more classical processors, the first classical variable by (-1)*^{m}* if the control qubit was measured in the X-basis or second classical variable by (-1)*^{m}* if the control qubit was measured in the Y-basis; and
in response to determining that the output quantum state does not indicate that each qubit was in the target computational basis state prior to measurement, discarding the repetition of the phase estimation experiment;
estimating (216), by the one or more classical processors, one or more phases of the first unitary operator or other operators based on the set of measurement data, comprising computing:
i) the final value of the first classical variable in the set of measurement data divided by a total number of times that the control qubit was measured in the X basis, added to
ii) *i* multiplied by the final value of the second classical variable in the set of measurement data divided by a total number of times that the control qubit was measured in the Y basis.

2. The method of claim 1, wherein the method further comprises:
generating multiple sets of measurement data, wherein each set of measurement data corresponds to a different number of times that the first unitary operator is applied to the system register in the quantum state; and
estimating one or more phases of the first unitary operator or other operators based on the multiple sets of measurement data.

3. The method of claim 1 or claim 2, wherein the first unitary operator comprises a time evolution operator generated by an *N*-qubit Hamiltonian.

4. The method of claim 3, wherein applying (208) the first unitary operator a number of times to the system register in the quantum state comprises applying the time evolution operator evaluated at a respective time step from an interval of predetermined length to the system register in the quantum state.

5. The method of claim 3, wherein the quantum state comprises a linear combination of one or more eigenstates of the *N*-qubit Hamiltonian, wherein each eigenstate in the linear combination comprises an associated amplitude.

6. The method of any one of claims 1 to 5, wherein estimating (216) one or more phases of the first unitary operator or other operators based on one or more sets of measurement data comprises:
estimating, for each of the one or more sets of measurement data, a phase function of the first unitary operator or other operators based on the set of measurement data; and
computing the one or more phases of the first unitary operator or other operators based on the estimated one or more phase functions.

7. The method of any preceding claim, wherein measuring (212) the control qubit to obtain a corresponding measurement result m comprises:
rotating the control qubit into the X basis and measuring the qubit in the X basis; or
rotating the control qubit into the Y basis and measuring the qubit in the Y basis.

8. The method of claim 6 when dependent on claim 5, wherein the estimated phase function comprises a noisy approximation of a phase function of the first unitary operator, and wherein the method further comprises applying a normalization condition to squares of the amplitudes associated with the respective eigenstates.

9. The method of claim 6, wherein computing the one or more phases of the first unitary operator or other operators based on the estimated one or more phase functions comprises applying classical signal processing to the one or more phase functions.

10. The method of claim 9, when dependent on claim 6 as dependent on claim 5, wherein computing one or more phases of the first unitary operator or other operators based on the estimated one or more phase functions comprises estimating eigenvalues and amplitudes corresponding to one or more eigenstates of the *N*-qubit Hamiltonian.

11. The method of claim 10, wherein the *N*-qubit Hamiltonian comprises a linear combination of diagonalizable sub-Hamiltonians, and wherein the method further comprises:
performing, for each sub-Hamiltonian, quantum phase estimation of a time evolution operator generated by the sub-Hamiltonian to determine an expectation value of the sub-Hamiltonian, wherein the expectation value comprises a sum of estimated eigenvalues weighted by the estimated amplitudes;
summing the determined expectation values of the sub-Hamiltonians to obtain an expectation value of the *N*-qubit Hamiltonian.

12. The method of claim 11, wherein performing, for each sub-Hamiltonian, quantum phase estimation of a time evolution operator generated by the sub-Hamiltonian comprises performing quantum phase estimation of a time evolution operator generated by each sub-Hamiltonian in parallel.

13. The method of claim 10, wherein the method further comprises:
performing quantum phase estimation of a time evolution operator generated by the N-qubit Hamiltonian to determine an expectation value of the N-qubit Hamiltonian, wherein the expectation value comprises a sum of estimated eigenvalues weighted by the estimated amplitudes.

14. The method of any preceding claim, wherein measuring each qubit in the system register to determine an output quantum state of the system register comprises measuring each qubit in the system register in the X or Y basis.

15. An apparatus comprising:
one or more classical processors; and
quantum computing hardware in data communication with the one or more classical processors, wherein the quantum computing hardware comprises:
one or more system registers, each system register comprising one or more qubits,
one or more control qubits, and
a plurality of control devices configured to operate the one or more system registers and the one or more control qubits;
wherein the apparatus is configured to perform the method of any one of claims 1 to 14.

## Patentansprüche

1. Verfahren zur Quantenphasenschätzung eines unitären Operators erster *N*-Qubits auf einem Quantenzustand, wobei das Verfahren von einem System durchgeführt wird, das einen oder mehrere klassische Prozessoren und Quantencomputing-Hardware umfasst, die mit dem einen oder den mehreren klassischen Prozessoren in Datenkommunikation stehen, wobei das Verfahren Folgendes umfasst:
Initialisieren (204) einer ersten klassischen Variable und einer zweiten klassischen Variable;
Erzeugen (202) eines Messdatensatzes, umfassend wiederholtes Durchführen eines Phasenschätzungsexperiments, wobei bei jeder Wiederholung ein aktueller Wert von einer der ersten oder der zweiten klassischen Variable basierend auf einem gemessenen Ergebnis des Phasenschätzungsexperiments erhöht wird, und Durchführen einer Wiederholung des Phasenschätzungsexperiments Folgendes umfasst:
Vorbereiten (206) eines Systemregisters der Quantencomputing-Hardware, wobei das Systemregister *N*-Qubits in dem Quantenzustand umfasst, umfassend Anwenden, durch die Quantencomputing-Hardware, eines zweiten unitären Operators (308) auf das Systemregister, wobei vor der Anwendung des zweiten unitären Operators jedes Qubit in dem Systemregister in einem Soll-Rechenbasiszustand initialisiert wird;
mehrmaliges Anwenden (208), durch die Quantencomputing-Hardware und geknüpft an die Bedingung eines Zustands eines Steuer-Qubits (302), des ersten unitären Operators (310) auf das Systemregister in dem Quantenzustand, um einen entwickelten Quantenzustand zu erzeugen, wobei vor der Anwendung des ersten unitären Operators die mehrmalige Initialisierung des Steuer-Qubits in einem Superpositionszustand durchgeführt wird;
Anwenden (210), durch die Quantencomputing-Hardware, einer Umkehrung des zweiten unitären Operators (312) auf das Systemregister in dem entwickelten Quantenzustand und Messen jedes Qubits in dem Systemregister, um einen Ausgabequantenzustand des Systemregisters zu bestimmen;
Messen (212), durch die Quantencomputing-Hardware, des Steuer-Qubits in der X-Basis oder Y-Basis, um ein entsprechendes Messergebnis *m* zu erlangen; und
Nachauswählen (214) auf dem Soll-Rechenbasiszustand, umfassend:
als Reaktion auf Bestimmen, dass der Ausgabequantenzustand anzeigt, dass sich jedes Qubit vor der Messung in dem Soll-Rechenbasiszustand befand, Erhöhen, durch den einen oder die mehreren klassischen Prozessoren, der ersten klassischen Variable um (-1)*^{m}*, wenn das Steuer-Qubit in der X-Basis gemessen wurde, oder der zweiten klassischen Variable um (-1)*^{m}*, wenn das Steuer-Qubit in der Y-Basis gemessen wurde; und
als Reaktion auf das Bestimmen, dass der Ausgabequantenzustand nicht anzeigt, dass sich jedes Qubit vor der Messung in dem Soll-Rechenbasiszustand befand, Verwerfen der Wiederholung des Phasenschätzungsexperiments;
Schätzen (216), durch den einen oder die mehreren klassischen Prozessoren, einer oder mehrerer Phasen des ersten unitären Operators oder anderer Operatoren basierend auf dem Messdatensatz, umfassend folgendes Berechnen:
i) des Endwerts der ersten klassischen Variable in dem Messdatensatz, dividiert durch eine Gesamtanzahl der Messungen des Steuer-Qubits in der X-Basis, addiert zu
ii) *i*, multipliziert mit dem Endwert der zweiten klassischen Variable in dem Messdatensatz, dividiert durch eine Gesamtanzahl der Messungen des Steuer-Qubits in der Y-Basis.

2. Verfahren nach Anspruch 1, wobei das Verfahren ferner Folgendes umfasst:
Erzeugen mehrerer Messdatensätze, wobei jeder Messdatensatz einer unterschiedlichen Anzahl von Anwendungen des ersten unitären Operators auf das Systemregister in dem Quantenzustand entspricht; und
Schätzen einer oder mehrerer Phasen des ersten unitären Operators oder anderer Operatoren basierend auf den mehreren Messdatensätzen.

3. Verfahren nach Anspruch 1 oder Anspruch 2, wobei der erste unitäre Operator einen durch einen *N*-Qubit-Hamiltonoperator erzeugten Zeitentwicklungsoperator umfasst.

4. Verfahren nach Anspruch 3, wobei mehrmaliges Anwenden (208) des ersten unitären Operators auf das Systemregister in dem Quantenzustand Anwenden des Zeitentwicklungsoperators, der zu einem jeweiligen Zeitschritt aus einem Intervall vorbestimmter Länge ausgewertet wird, auf das Systemregister in dem Quantenzustand umfasst.

5. Verfahren nach Anspruch 3, wobei der Quantenzustand eine Linearkombination eines oder mehrerer Eigenzustände des *N-*Qubit-Hamiltonoperators umfasst, wobei jeder Eigenzustand in der Linearkombination eine zugehörige Amplitude umfasst.

6. Verfahren nach einem der Ansprüche 1 bis 5, wobei Schätzen (216) einer oder mehrerer Phasen des ersten unitären Operators oder anderer Operatoren basierend auf dem einen oder den mehreren Messdatensätzen Folgendes umfasst:
Schätzen, für jeden des einen oder der mehreren Messdatensätze, einer Phasenfunktion des ersten unitären Operators oder anderer Operatoren basierend auf dem Messdatensatz; und
Berechnen der einen oder der mehreren Phasen des ersten unitären Operators oder anderer Operatoren basierend auf der einen oder den mehreren geschätzten Phasenfunktionen.

7. Verfahren nach einem der vorhergehenden Ansprüche, wobei Messen (212) des Steuer-Qubits, um ein entsprechendes Messergebnisses m zu erlangen, Folgendes umfasst:
Drehen des Steuer-Qubits in die X-Basis und Messen des Qubits in der X-Basis; oder
Drehen des Steuer-Qubits in die Y-Basis und Messen des Qubits in der Y-Basis.

8. Verfahren nach Anspruch 6 in Abhängigkeit von Anspruch 5, wobei die geschätzte Phasenfunktion eine verrauschte Näherung einer Phasenfunktion des ersten unitären Operators umfasst, und wobei das Verfahren ferner Anwenden einer Normalisierungsbedingung auf Quadrate der Amplituden, die den jeweiligen Eigenzuständen zugeordnet sind, umfasst.

9. Verfahren nach Anspruch 6, wobei Berechnen der einen oder der mehreren Phasen des ersten unitären Operators oder anderer Operatoren basierend auf der einen oder den mehreren geschätzten Phasenfunktionen Anwenden einer klassischen Signalverarbeitung auf die eine oder die mehreren Phasenfunktionen umfasst.

10. Verfahren nach Anspruch 9 in Abhängigkeit von Anspruch 6 wie in Abhängigkeit von Anspruch 5, wobei Berechnen einer oder mehrerer Phasen des ersten unitären Operators oder anderer Operatoren basierend auf der einen oder den mehreren geschätzten Phasenfunktionen Schätzen von Eigenwerten und Amplituden entsprechend einem oder mehreren Eigenzuständen des *N*-Qubit-Hamiltonoperators umfasst.

11. Verfahren nach Anspruch 10, wobei der *N*-Qubit-Hamiltonoperator eine Linearkombination von diagonalisierbaren Sub-Hamiltonoperatoren umfasst, und wobei das Verfahren ferner Folgendes umfasst:
Durchführen, für jeden Sub-Hamiltonoperator, einer Quantenphasenschätzung eines durch den Sub-Hamiltonoperator erzeugten Zeitentwicklungsoperators, um einen Erwartungswert des Sub-Hamiltonoperators zu bestimmen, wobei der Erwartungswert eine Summe von geschätzten Eigenwerten, gewichtet durch die geschätzten Amplituden, umfasst;
Summieren der bestimmten Erwartungswerte der Sub-Hamiltonoperatoren, um einen Erwartungswert des *N*-Qubit-Hamiltonoperators zu erlangen.

12. Verfahren nach Anspruch 11, wobei Durchführen, für jeden Sub-Hamiltonoperator, einer Quantenphasenschätzung eines durch den Sub-Hamiltonoperator erzeugten Zeitentwicklungsoperators paralleles Durchführen einer Quantenphasenschätzung eines durch jeden Sub-Hamiltonoperator erzeugten Zeitentwicklungsoperators umfasst.

13. Verfahren nach Anspruch 10, wobei das Verfahren ferner Folgendes umfasst:
Durchführen einer Quantenphasenschätzung eines durch den *N-*Qubit-Hamiltonoperator erzeugten Zeitentwicklungsoperators, um einen Erwartungswert des *N*-Qubit-Hamiltonoperators zu bestimmen, wobei der Erwartungswert eine Summe von geschätzten Eigenwerten, gewichtet durch die geschätzten Amplituden, umfasst.

14. Verfahren nach einem der vorhergehenden Ansprüche, wobei Messen jedes Qubits in dem Systemregister, um einen Ausgabequantenzustand des Systemregisters zu bestimmen, Messen jedes Qubits in dem Systemregister in der X- oder Y-Basis umfasst.

15. Einrichtung, umfassend:
einen oder mehrere klassische Prozessoren; und
eine Quantencomputing-Hardware in Datenkommunikation mit dem einen oder den mehreren klassischen Prozessoren, wobei die Quantencomputing-Hardware Folgendes umfasst:
ein oder mehrere Systemregister, wobei jedes Systemregister ein oder mehrere Qubits umfasst,
ein oder mehrere Steuer-Qubits, und
eine Mehrzahl von Steuervorrichtungen, die dazu konfiguriert sind, das eine oder die mehreren Systemregister und das eine oder die mehreren Qubits zu betreiben;
wobei die Einrichtung dazu konfiguriert ist, das Verfahren nach einem der Ansprüche 1 bis 14 durchzuführen.

## Revendications

1. Procédé d'estimation de phase quantique d'un premier opérateur unitaire à *N* qubits sur un état quantique, le procédé étant réalisé par un système comprenant un ou plusieurs processeurs classiques et un matériel de calcul quantique en communication de données avec les un ou plusieurs processeurs classiques, le procédé comprenant :
l'initialisation (204) d'une première variable classique et d'une seconde variable classique ;
la génération (202) d'un ensemble de données de mesure, comprenant la réalisation répétée d'une expérience d'estimation de phase, dans lequel, à chaque répétition, une valeur actuelle de l'une de la première ou de la seconde variable classique est incrémentée sur la base d'un résultat mesuré de l'expérience d'estimation de phase et la réalisation d'une répétition de l'expérience d'estimation de phase comprend :
la préparation (206) d'un registre système du matériel de calcul quantique, le registre système comprenant *N* qubits, dans l'état quantique, comprenant l'application, par le matériel de calcul quantique, d'un second opérateur unitaire (308) au registre système, dans lequel, avant l'application du second opérateur unitaire, chaque qubit du registre système est initialisé dans un état de base de calcul cible ;
l'application (208), par le matériel de calcul quantique et conditionnée par un état d'un qubit de commande (302), du premier opérateur unitaire (310) un certain nombre de fois au registre système dans l'état quantique pour générer un état quantique évolué, dans lequel, avant l'application du premier opérateur unitaire ledit nombre de fois, le qubit de commande est initialisé dans un état de superposition ;
l'application (210), par le matériel de calcul quantique, d'une inverse du second opérateur unitaire (312) au registre système dans l'état quantique évolué et la mesure de chaque qubit dans le registre système pour déterminer un état quantique de sortie du registre système ;
la mesure (212), par le matériel de calcul quantique, du qubit de commande dans la base X ou la base Y pour obtenir un résultat de mesure correspondant *m* ; et
la post-sélection (214) sur l'état de base de calcul cible, comprenant :
en réponse à la détermination que l'état quantique de sortie indique que chaque qubit se trouvait dans l'état de base de calcul cible avant la mesure, l'incrémentation, par les un ou plusieurs processeurs classiques, de la première variable classique de (-1)*^{m}* si le qubit de commande a été mesuré dans la base X ou de la seconde variable classique de (-1)*^{m}* si le qubit de commande a été mesuré dans la base Y ; et
en réponse à la détermination que l'état quantique de sortie n'indique pas que chaque qubit se trouvait dans l'état de base de calcul cible avant la mesure, la mise à l'écart de la répétition de l'expérience d'estimation de phase ;
l'estimation (216), par les un ou plusieurs processeurs classiques, d'une ou de plusieurs phases du premier opérateur unitaire ou d'autres opérateurs sur la base de l'ensemble de données de mesure, comprenant le calcul :
i) de la valeur finale de la première variable classique dans l'ensemble de données de mesure divisée par le nombre total de fois où le qubit de commande a été mesuré dans la base X, ajoutée à
ii) *i* multiplié par la valeur finale de la seconde variable classique dans l'ensemble de données de mesure divisée par le nombre total de fois où le qubit de commande a été mesuré dans la base Y.

2. Procédé selon la revendication 1, dans lequel le procédé comprend en outre :
la génération de multiples ensembles de données de mesure, dans lequel chaque ensemble de données de mesure correspond à un nombre différent de fois où le premier opérateur unitaire est appliqué au registre système dans l'état quantique ; et
l'estimation d'une ou de plusieurs phases du premier opérateur unitaire ou d'autres opérateurs sur la base des multiples ensembles de données de mesure.

3. Procédé selon la revendication 1 ou la revendication 2, dans lequel le premier opérateur unitaire comprend un opérateur d'évolution temporelle généré par un hamiltonien à *N* qubits.

4. Procédé selon la revendication 3, dans lequel l'application (208) du premier opérateur unitaire un certain nombre de fois au registre système dans l'état quantique comprend l'application de l'opérateur d'évolution temporelle évalué à un pas de temps respectif d'un intervalle de longueur prédéterminée au registre système dans l'état quantique.

5. Procédé selon la revendication 3, dans lequel l'état quantique comprend une combinaison linéaire d'un ou de plusieurs états propres de l'hamiltonien à *N* qubits, dans lequel chaque état propre dans la combinaison linéaire comprend une amplitude associée.

6. Procédé selon l'une quelconque des revendications 1 à 5, dans lequel l'estimation (216) d'une ou de plusieurs phases du premier opérateur unitaire ou d'autres opérateurs sur la base d'un ou de plusieurs ensembles de données de mesure comprend :
l'estimation, pour chacun des un ou plusieurs ensembles de données de mesure, d'une fonction de phase du premier opérateur unitaire ou d'autres opérateurs sur la base de l'ensemble de données de mesure ; et
le calcul des une ou plusieurs phases du premier opérateur unitaire ou d'autres opérateurs sur la base des une ou plusieurs fonctions de phase estimées.

7. Procédé selon une quelconque revendication précédente, dans lequel la mesure (212) du qubit de commande pour obtenir un résultat de mesure correspondant m comprend :
la rotation du qubit de commande dans la base X et la mesure du qubit dans la base X ; ou
la rotation du qubit de commande dans la base Y et la mesure du qubit dans la base Y.

8. Procédé selon la revendication 6 lorsqu'elle dépend de la revendication 5, dans lequel la fonction de phase estimée comprend une approximation bruitée d'une fonction de phase du premier opérateur unitaire, et dans lequel le procédé comprend en outre l'application d'une condition de normalisation aux carrés des amplitudes associées aux états propres respectifs.

9. Procédé selon la revendication 6, dans lequel le calcul des une ou plusieurs phases du premier opérateur unitaire ou d'autres opérateurs sur la base des une ou plusieurs fonctions de phase estimées comprend l'application d'un traitement de signal classique aux une ou plusieurs fonctions de phase.

10. Procédé selon la revendication 9, lorsqu'elle dépend de la revendication 6, telle qu'elle dépend de la revendication 5, dans lequel le calcul d'une ou de plusieurs phases du premier opérateur unitaire ou d'autres opérateurs sur la base des une ou plusieurs fonctions de phase estimées comprend l'estimation de valeurs propres et d'amplitudes correspondant à un ou plusieurs états propres de l'hamiltonien à *N* qubits.

11. Procédé selon la revendication 10, dans lequel l'hamiltonien à *N* qubits comprend une combinaison linéaire de sous-hamiltoniens diagonalisables, et dans lequel le procédé comprend en outre :
la réalisation, pour chaque sous-hamiltonien, d'une estimation de phase quantique d'un opérateur d'évolution temporelle généré par le sous-hamiltonien afin de déterminer une valeur moyenne du sous-hamiltonien, dans lequel la valeur moyenne comprend une somme de valeurs propres estimées pondérées par les amplitudes estimées ;
la somme des valeurs moyennes déterminées des sous-hamiltoniens pour obtenir une valeur moyenne de l'hamiltonien à *N* qubits.

12. Procédé selon la revendication 11, dans lequel la réalisation, pour chaque sous-hamiltonien, d'une estimation de phase quantique d'un opérateur d'évolution temporelle généré par le sous-hamiltonien comprend la réalisation en parallèle d'une estimation de phase quantique d'un opérateur d'évolution temporelle généré par chaque sous-hamiltonien.

13. Procédé selon la revendication 10, dans lequel le procédé comprend en outre :
la réalisation d'une estimation de phase quantique d'un opérateur d'évolution temporelle généré par l'hamiltonien à N qubits afin de déterminer une valeur moyenne de l'hamiltonien à N qubits, dans lequel la valeur moyenne comprend une somme de valeurs propres estimées pondérées par les amplitudes estimées.

14. Procédé selon une quelconque revendication précédente, dans lequel la mesure de chaque qubit dans le registre système pour déterminer un état quantique de sortie du registre système comprend la mesure de chaque qubit dans le registre système dans la base X ou Y.

15. Appareil comprenant :
un ou plusieurs processeurs classiques ; et
un matériel de calcul quantique en communication de données avec les un ou plusieurs processeurs classiques, dans lequel le matériel de calcul quantique comprend :
un ou plusieurs registres système, chaque registre système comprenant un ou plusieurs qubits,
un ou plusieurs qubits de commande, et
une pluralité de dispositifs de commande configurés pour faire fonctionner les un ou plusieurs registres système et les un ou plusieurs qubits de commande ;
dans lequel l'appareil est configuré pour réaliser le procédé selon l'une quelconque des revendications 1 à 14.
